Europäisches Patentamt

(19) European Patent Office

Office européen des brevets

(11) Publication number: **0 433 004 A2**

# (12) EUROPEAN PATENT APPLICATION

(21) Application number: **90313415.3**

(22) Date of filing: **11.12.90**

(51) Int. Cl.⁵: **A23G 3/00, A23L 1/22**

(30) Priority: **14.12.89 US 450756**

(43) Date of publication of application:
**19.06.91 Bulletin 91/25**

(84) Designated Contracting States:
**BE CH DE DK ES FR GB GR IT LI NL SE**

(71) Applicant: **WARNER-LAMBERT COMPANY**
**201 Tabor Road**
**Morris Plains New Jersey 07950 (US)**

(72) Inventor: **Cherukuri, Subraman Rao**
**10 Jean Drive**
**Towaco, New Jersey 07082 (US)**
Inventor: **Corsello, Vincent**
**2 Sycamore Terrace**
**Cedar Knolls, New Jersey 07927 (US)**
Inventor: **Raman, Krishna P.**
**5 Marre Drive**
**Randolph, New Jersey 07869 (US)**
Inventor: **Hussein, Mamoun Mahmoud**
**115 Boulevard**
**Mt. Lakes, New Jersey 07046 (US)**

(74) Representative: **Jones, Michael Raymond et al**
**HASELTINE LAKE & CO. Hazlitt House 28**
**Southampton Buildings Chancery Lane**
**London WC2A 1AT (GB)**

(54) **Long lasting flavour release in confectionery compressed tablets.**

(57)  A confectionery compressed tablet which provides both instant and prolonged delivery of flavour ingredients, such as flavours, sweeteners and mixtures thereof. There is also provided a process for preparing confectionery compressed tablets which provide both rapid initial delivery of an active material and deferred delivery of the same or a second active material over a period of time.

EP 0 433 004 A2

# LONG LASTING FLAVOUR RELEASE IN CONFECTIONERY COMPRESSED TABLETS

The present invention relates to controlled release of active materials such as flavors, sweeteners, and mixtures thereof in compressed tablets, and in particular, is directed to compressed tablets and a process for making same with both instant and timed delivery to the oral cavity of taste-affecting materials.

Flavor delivery systems are well known in the art and may be divided into various classes based upon their physical characteristics, namely, liquids, emulsions, pastes or solids. The potential uses for each delivery system differ as do their method of manufacture.

Over the years, considerable effort has been directed to the preparation of flavoring materials. Specifically, flavor materials have been sought which provide greater intensity coupled with sustained flavor release for long periods of time.

An outgrowth of this activity has been the observation that confectionery compressed tablets which contain only free flavor oil fail to maintain suitable flavor release characteristics in the oral cavity.

To overcome this difficulty with flavor oils, various attempts have been made to encapsulate the flavor oils or use dried ingredients to prolong the delivery of the flavors. Considerable effort has also been directed to the development of delayed-release flavoring agents which delay release of the flavor and permit uniform release of the flavor over an extended period of time. The obvious benefit of immediate and delayed release is the ability to obtain uniform flavor sensation during the entire consumption period. This has not been attainable by direct incorporation of conventional seasonings and flavor oils into confectionery compressed tablet formulations suitable for human consumption.

Spray drying is one of the most widely used techniques for fixing a flavor. In this procedure, a flavor oil is usually blended with a film forming agent dispersed in water and then emulsified to form a stable emulsion. Emulsification is necessary because flavor oils are insoluble in the water needed to dissolve the film forming agent. Obtaining an emulsion of low viscosity, at high solids content, is critical to producing an acceptable product. Stability at higher temperatures is also critical to avoid volatilization of the flavor oil. Maintaining low inlet temperatures (i.e., around 155°C) as well as minimizing the residence time in the dryer are beneficial if the flavor is chemically unstable. Air drying conditions depend on the emulsion and product characteristics such as particle size of the product required. Modifications to the use of heat to remove the water from the emulsion have also been attempted. Some of these include the use of a dehydrating solvent as the drying medium rather than hot air. Freeze drying has also been contemplated.

Flavor fixation has also been obtained by the extrusion method wherein the flavor oil is co-extruded with a water soluble sugar or sugar mixture, dried and ground for use. These products find application in dry mixes for instant release of the flavor upon contact with water. Such products generally contain 10 to 15% by weight of flavor oil.

An extensive discussion of the prior art with respect to the extension of flavor is found in U.S. Patent No. 4,590,075 to Wei, et al. The patentees discuss the preparation of encapsulated flavors which are added together with a quantity of non-confined hydrophobic flavor oil to a suspension agent before formulation in a chewing gum (U.S. Patent No. 3,920,849 to Marmo, et al.) ; the encapsulation of flavor in high molecular weight material such as polyvinyl acetate (U.S. Patent No. 3,826,847 to Ogawa, et al.) ; the preparation of a flavor composite by cross-linking the flavor with a water-insoluble hydrophilic polymer such as hydroxyethyl acrylate (U.S. Patent No. 3,761,286) ; and the preparation of microencapsulated flavor particles and their dispersion in a slurry on the surface of a chewing gum (U.S. Patent No. 3,962,463). Further, U.S. Patent No. 4,695,462 to Yang, et al. is noted wherein a flavor delivery system is discussed which relies on the immobilization of the flavor within a crosslinked hydrocolloid multivalent alginate or carageenenate matrix.

Further, in U.S. Patent No. 4,597,970 to Sharma, et al. a delivery system is disclosed for actives such as sweeteners and flavors which utilizes a hydrophobic matrix comprising edible fatty acids or waxes, lecithin and a glyceride component. This system is said to provide a protective barrier and controlled release characteristics to the active so contained. The combination of materials in the encapsulating matrix provides wetting capabilities with respect to non-uniform core materials such as aspartame, while providing improved heat stability, and thereby extended high temperature processing capability. These attributes were frequently achieved at a cost of delay in release of the active.

In U.S. Patent No. 3,867,556 to Darragh, et al., volatile flavors were also encapsulated in a fat or wax material. The patentees had found that the initial or base encapsulation displayed excessive instability to heat, and as their product was intended primarily for incorporation into baked goods, they applied a second coating of a water-soluble material such as gum arabic, which would provide high temperature stability while conferring rapid disintegration on contact with moisture. The Darragh, et al. product likewise exhibited delayed flavor release.

Further, U.S. Patent No. 4,515,769 to Merritt, et al. discloses encapsulation of flavor material in a partially hydrophilic matrix comprising gelatin, a natural gum or albumin or a plasticizer. This combined encapsulant is placed in an emulsion with the flavoring agent and thereafter dried to a solid matrix which was then ground to a base powder. The base powder was then coated with a water-insoluble material which purported to prevent flavor loss and delay flavor release in contact with moisture. Merritt, et al. sought only to achieve a burst of flavor when the physical mastication of their flavor composite ruptured the outer encapsulating material.

U.S. Patent No. 4,087,557 to Bakal, et al. relates to the incorporation of an artificial sweetener directly into the ester gum component of a chewing gum base, to achieve a delay and corresponding extension in sweetener release (Column 2, Lines 31-42). The patent contemplates the incorporation of certain flavors, specifically, food acids such as tartaric acid or succinic acid directly into the ester gum component. Bakal, et al. however, indicate that conventional flavors such as flavor oils are added separately after the gum base constituents including the artificial sweetener-containing ester gum have been mixed with each other and cooled. The flavor component is incorporated into chewing gums prepared in accordance with the patent in the conventional fashion, i.e., by direct incorporation of the artificial flavor and/or by the incorporation of flavor coated with a hydrophilic material such as gum arabic. Bakal, et al., accordingly, offer no solutions to the problem of flavor delivery and extension thereof.

Other approaches to the preparation of flavor composites, particularly with flavor oils, are noted. Thus, U.S. Patent No. 3,041,180 to Swisher discloses a process for extruding a flavor oil with glycerine and corn syrup solids to form an encapsulated extruded flavor oil. The solid was dried and yielded a particulate solid. U.S. Patent No. 4,610,890 to Miller, et al. discloses another process for preparing an extruded flavor oil with sugar, a starch hydrolysate and an emulsifier.

U.S. Patent Nos. 4,448,789 and 4,569,852 to Yang discloses a novel flavoring agent—hydrophilic polymer—by blending the flavor with the polymer and blending while heating to prepare a homogeneous product. Once coupled and ground, the product can be used as a flavoring for chewing gum and confectionery products.

U.S. Patent No. 4,271,202 to Giel relates to a spray-drying process for forming solid flavoring material capable of including high percentages of flavoring oil per total particulate unit of weight. Because of the high oil content possible, such spray-dried products have found wide use in a number of beverages and other foods. However, it was also found that spray-dried flavors prepared by this and similar known methods typically exhibit a relatively limited shelf life. In addition, the high temperatures necessarily involved during spray-drying processes have been found to impair the flavor and aroma of various heat-sensitive oil flavors, such as those in citrus fruit. Furthermore, solids formed by spray-drying commonly exhibit hygroscopic characteristics making them difficult to handle and store.

In addition to these techniques, U.S. Patent No. 4,452,821 to Gergely is directed to a confectionery product, especially a chewing gum, that purports to offer prolonged, extended delivery of flavoring, aroma and/or active pharmaceutical ingredient. This is accomplished by providing the flavoring, aroma or active pharmaceutical ingredient in a solid solution or mixture within a wax containing functional groups with the wax forming a homogeneous mixture of solid solution. The wax does not contain any functional groups and is substantially immiscible with the flavoring, aroma or active pharmaceutical ingredient.

The approaches to flavor modification discussed above all fall short of providing a flavor delivery system which achieves the advantages of flavor intensity and fullness inherent in flavor oils in combination with improved release and extension characteristics. In most instances, confectionery compressed tablets contain flavor liquid components and are unable to provide both rapid initial delivery and long lasting delivery of flavors or breath freshening agents. Moreover, these confectionery compressed tablets suffer from a relatively short shelf life. Shortened shelf life has been caused by flavor migration, interaction with other ingredients in the tablets, or when aspartame is present in the confectionery product. Oxidation of the flavor ingredients has also been known to occur. In addition, manufacturers of confectionery compressed tablets of the prior art are required to exercise precautions in handling due to the lack of temperature stability of the product.

In commonly assigned co-pending Application Serial No. 361,529 filed June 5, 1989, a flavor composite is disclosed which comprises a liquid flavor in a solution mixture with a resin component selected from wood rosins, ester gums and mixtures thereof. This composite offers greater efficiency in flavor delivery with improved protection and prolonged release of the flavor active. While the aforenoted composite represents a dramatic improvement in flavor delivery, the broad and diverse environments in which flavors and other actives are incorporated places demands upon the stability and integrity of the delivery system.

While it would seem that hydrophobic encapsulating agents provide better impermeability and gradual release characteristics than hydrophilic coatings, it is not known whether any hydrophobic coatings have been successfully employed in the past for use in compressed tablets suitable for remaining in the oral cavity and delivery an active ingredient.

According to one aspect of the present invention, there is provided a compressed tablet having flavour ingredients combined in the tablet to provide a controlled release thereof in the oral cavity, comprising :

(a) at least a first flavour ingredient intimately bound in a hydrophilic composition to provide rapid flavour release, and

(b) a second flavour ingredient encapsulated in a hydrophobic composition to provide deferred delivery of the second ingredient over a period of time.

According to another aspect of the present invention there is provided a method of preparing a confectionery compressed tablet having flavour ingredients with controlled release including the steps of :

(a) blending a first flavour ingredient intimately bound in a hydrophilic composition and a second flavour ingredient encapsulated in a hydrophobic composition with a confectionery tablet base ; and

(b) forming compressed tablets from the mixture which results from step (a) hereinabove.

More particularly, a hydrophilic composition of the system includes a hydrophilic component selected from polymer systems, gum arabic carrageen, gelatin, starches, modified starches, maltodextrin, corn syrup solids, hydrocolloids and other film formers. The flavour ingredient, or component, which is intimately bound thereto is present in an amount from 1% to 30% by weight of the total hydrophilic composition.

The present invention makes it possible to provide a compressed tablet providing both a rapid initial delivery as well as prolonged delivery of taste- affecting materials to the oral cavity ; and to provide a compressed tablet with improved temperature stability of the ingredients contained within the compressed tablet.

The present invention also makes it possible to provide a compressed tablet which results in reduced oxidation of flavour components, or with reduced interaction of the ingredients contained within the compressed tablet, or with reduced flavour migration.

A hydrophobic composition for use in the present invention is preferably prepared by spray congealing the flavour ingredient with a hydrophobic component selected from fats, waxes, resins and mixtures thereof. When the hydrophobic component is a fat, the flavour can be included in an amount which ranges from 5% to 20% by weight of the hydrophobic composition, and the fat is present in the amount from 50% to 85% by weight by the hydrophobic composition. When flavour is used in combination with wax to form a hydrophobic composition, the wax as a hydrophobic component can be included in an amount from 45% to 85% while the flavour is present in an amount of from 3% to 30% of the hydrophobic composition. When the hydrophobic composition is prepared with a resin in combination with a flavour, the resin component is present in an amount of from 20% to 80% by weight of the composition, while the flavour component is present in an amount of from 80% to 20% by weight of the hydrophobic composition.

As previously mentioned, other possibilities occur by use of combinations of hydrophobic components. For example, when fat and resin are included together with a flavour, the fat is included in an amount of from 50% to 84%, the resin is present in an amount of from 10% to 20%, and the flavour component is present in an amount from 5% to 25% by weight of the composition. In the event that wax is used with resin, the wax component is included in an amount of from 45 to 85%, the resin is included in an amount of from 10 to 20%, and the flavour component is present in an amount of from 5 to 30% by weight of the hydrophobic composition. When fat and wax are used together, the fat is included in an amount of from 5 to 85%, the wax is included in an amount of from 5 to 70%, and the flavour component is included in an amount of from 5 to 30% of the hydrophobic composition. Finally, when fat, wax and resin are used in combination with the flavour, the fat is included in an amount of from 30% to 75%, the wax is included in an amount of from 5% to 25%, the resin is included in an amount of from 10% to 25%, and the flavour is included in an amount from 5% to 30% by weight of the hydrophobic composition.

The fat or wax component of the hydrophobic composition includes fatty acids such as hydrogenated and partially hydrogenated oils ; mono-, di- and triglycerides, polyglycerol esters and sorbitol esters, with castor oil, hydrogenated soybean oil and hydrogenated cottonseed oil particularly preferred. Waxes include natural and synthetic waxes, with representative waxes comprising polyolefin waxes, paraffin wax, beeswax, carnauba wax, microcrystalline wax, and mixtures, with microcrystalline wax and carnauba wax particularly preferred.

The hydrophobic component may be prepared by spray drying techniques which are known in the art.

The hydrophobic component may be prepared by first heating the fat, wax or mixture thereof to its melting point and maintaining it at a temperature of 85°C to 90°C under agitation. An emulsifier may be added to the resulting melt, and in the instance where the delivery system is prepared to include a sweetener, the sweetener is likewise added thereto. Emulsified flavour oil is then added to the melted hydrophobic component and is agitated to form a homogeneous mixture which is thereafter spray congealed to form solid particles containing a flavour intimately bound throughout the hydrophobic component, alone or in admixture with a sweetener.

A confectionery compressed tablet composition which includes the inventive system may be prepared by first blending a sweetener/bulking agent with a breath deodorant. The sweetener/bulking agent can be, for example, sugar or sugar alcohol with a high intensity sweetener. An example of a suitable breath deodorant is copper gluconate. A controlled-release system prepared in accordance with the present invention is then

4

added and the mixing is continued. Thereafter, a colouring agent, if necessary, and a lubricant are added and mixed, after which the resultant mixture is compressed into a tablet.

One advantage of the compressed tablet of the present invention is the protective effect that the hydrophilic component and the hydrophobic component exert on the active ingredient. As a result of this protective effect, the flavour is held by the hydrophobic composition and compressed tablets formulated with the present system exhibit both rapid initial flavour delivery as well as deferred flavour release.

An additional advantage of the compressed tablet of the present invention is that protection to the active ingredients is provided and thereby the longevity and intensity of both flavour and sweetness release are stabilized.

The system of the present invention may be used alone or in combination with conventional flavours. including liquid flavours, spray dried flavours and the like, as well as with optional sweeteners, in various edible products.

The present invention includes both sugar containing and sugarless confectionery compressed tablets.

In the drawings, which are referred to in the specific Examples, the following Figures are shown :-

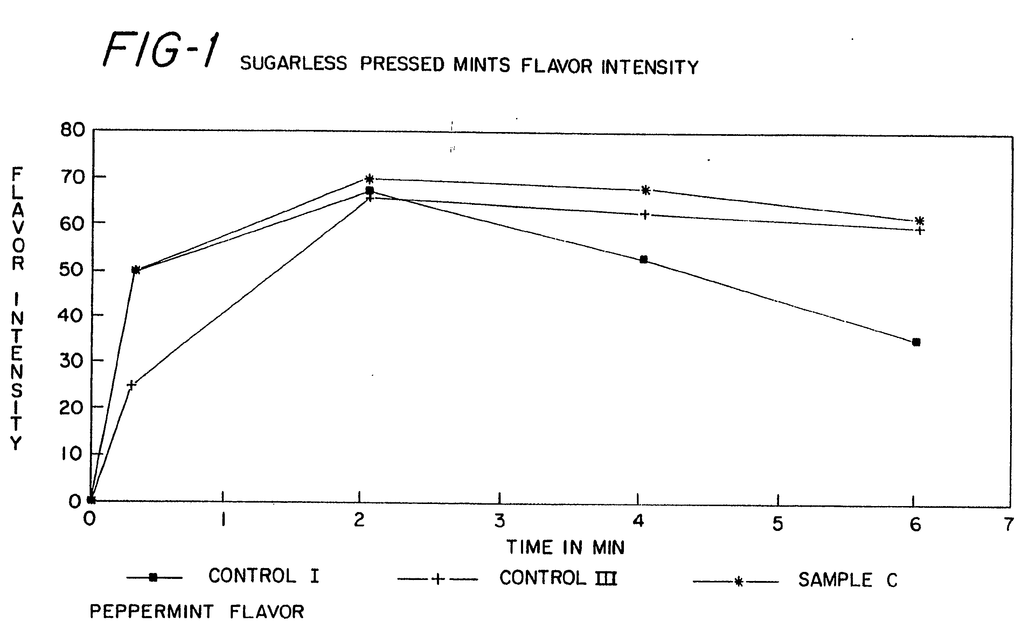

Figure 1 is a graph presenting the results of comparative sensory evaluation testing of a sugarless peppermint flavoured confectionery compressed tablet containing the inventive flavour delivery system, a control confectionery compressed tablet containing only conventional liquid peppermint flavour, and a control confectionery compressed tablet containing only fat encapsulated flavour.

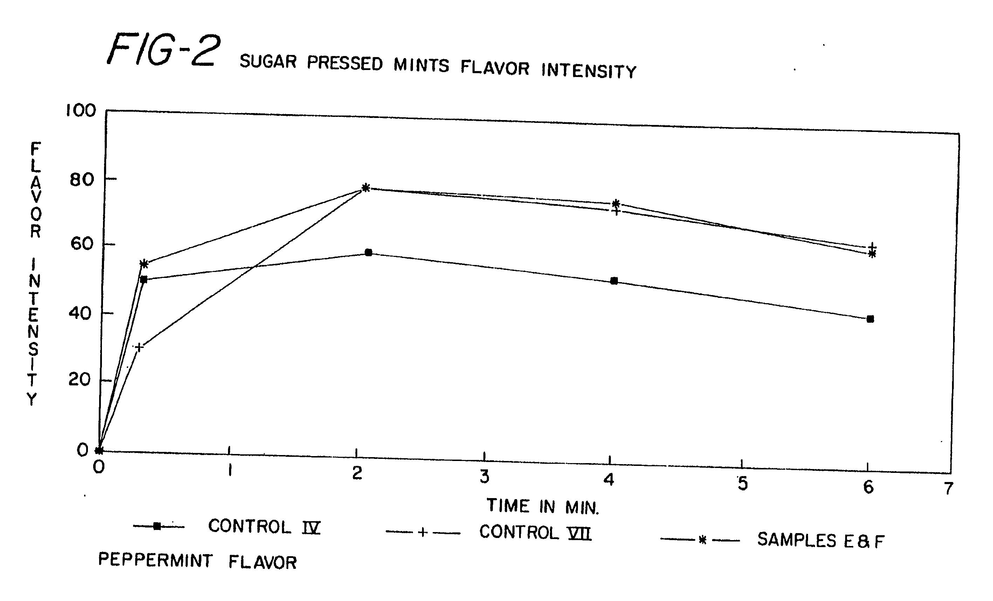

Figure 2 is a graph presenting the results of comparative sensory evaluation testing of a sugared peppermint flavoured confectionery compressed tablet containing the inventive flavour delivery system, a control confectionery tablet containing only conventional liquid peppermint flavour, and a control confectionery compressed tablet containing only fat encapsulated flavour.

The flavour itself is present in an amount which may range from 0.05% to 1.0% by weight of the total tablet. A preferable range of the total flavour ingredient is from 0.1% to 0.4% and the most preferable range of the flavour component is from 0.15% to 0.35% by weight of compressed tablet.

Optionally, an emulsifier may be included as part of the hydrophobic composition, and, in a preferred embodiment, the emulsifier can be present in an amount up to approximately 10% by weight of the hydrophobic composition. When emulsifiers are employed, suitable emulsifiers may include mono-, di- and triglyceride esters of fatty acids, poly glycerol esters and the like. More particularly, the emulsifier may be selected from lecithin, stearates, ester derivatives of stearates, palmitate, ester derivatives of palmitate, oleates, ester derivatives of oleates, glycerides, sucrose polyesters, polyglycerolesters, and mixtures thereof. In a preferred embodiment, the emulsifier may be present in an amount from 2% to 7% by weight of the hydrophobic composition. In a most preferred embodiment, the emulsifier component is present in an amount of from 4% to 6% by weight of the hydrophobic composition.

In accordance with a further embodiment, the present invention may be formulated with a sweetener in an amount that may range up to approximately 3000 parts per million and preferably from 300 to 2,000, and most preferably from 1200 to 1800 parts per million thereof, to offer a combined sensation of flavour and sweetness. The sweetener is added to the hydrophobic composition during the formulation of the delivery system, as described herein. Suitable sweeteners include the synthetic intense sweeteners such as soluble saccharin salts ; cyclamate salts ; stevioside ; glycyrrhizin, dipotassium glycyrrhizin, and glycyrrhizic acid ammonium salt ; N-L-alpha-Aspartyl-L-phenylalanine 1-methyl ester (Aspartame) ; potassium salt of 6-methyl-1,2,3-oxathiazin-4(3H)-one-2,2-dioxide (Acesulfame-K, a commercially available product of Hoechst Celanese Corporation, Somerville, New Jersey) ; 4,1',6',-Trichloro-4,1',6'-trideoxygalactosucrose (Sucralose, a commercially available product of McNeil Specialty Products Company, Skillman, New Jersey) ; L-alpha-Aspartyl-N-(2,2,4,4-tatramethyl-3-thietanyl)-D-alaninamide hydrate (Alitame, a commercially available product of Pfizer, New York, New York) ; and thaumatin (Talin).

The above sweeteners and similar intense sweeteners not listed above are chemically distinct and often present special problems when they are included in ingestible products. For example, certain sweeteners present stability problems, such as Aspartame which breaks down in the presence of aldehydes, ketones, moisture and the like. Similarly, other sweeteners exhibit a bitter aftertaste or off-note, such as Saccharin (a commercially available product of PMC Specialty Group Inc., Cincinnati, Ohio), Stevioside, Acesulfame-K, glycyrrhizin and its salts, and Talin. The incorporation of the aforenoted sweeteners into the present system overcomes the prior drawbacks to their use, as the stability and taste-masking capability of the present delivery system provide the necessary protection for these intense sweeteners and improves and enhances their sweetness sensation in ingestible products.

In addition, where the hydrophobic composition is a resin-flavor system, it has been found that an interaction exists between flavors, especially flavor oils, and resins such as wood rosins and rosin esters, such that the resins protect and mask the flavor. Accordingly, it is further theorized that an increase in the amount of resin in solution with a flavor such as a characteristically volatile flavor oil, shields the aroma of the flavor oil and decreases its potent odor.

Useful flavoring agents may be chosen from synthetic flavoring liquids such as synthetic flavor oils and flavoring aromatics and/or oils ; and/or liquids, oleoresin or extracts derived from plants, leaves, flowers, fruits, etc., and combinations thereof. Preferably, the flavor component is selected from spearmint oil, cinnamon oil, oil of wintergreen (methylsalicylate) and peppermint oil, clove oil, bay oil, anise oil, eucalyptus oil, thyme oil, cedar leaf oil, oil of nutmeg, allspice, oil of sage, mace, oil of bitter almonds, and cassia oil. Also useful are artificial, natural or synthetic fruit flavors such as vanilla, and citrus oils including lemon, orange, grape, lime and grapefruit and fruit essences including apple, pear, peach, grape, strawberry, raspberry, cherry, plum, pineapple, apricot and so forth.

The term "resins" as used herein refers to resins such as wood rosins, rosin esters and ester gums. Suitable resins accordingly may be selected from pentaerythritol ester of partially hydrogenated wood rosin, pentaerythritol ester of wood rosin, glycerol ester of wood rosin, glycerol ester of partially dimerized rosin, glycerol ester of polymerized rosin, glycerol ester of tall oil rosin, glycerol ester of wood rosin and partially hydrogenated wood/gum rosin and partially hydrogenated methyl ester of rosin, such as polymers of alpha-pinene or beta-pinene ; terpene resins including polyterpene and mixtures thereof.

The above indicated resin components useful in accordance with the present invention are selected because of their compatible temperature characteristics. Thus, the glycerol ester of partially hydrogenated wood or gum rosin, manufactured by Hercules Chemical and identified as Resin Ester #5, has a softening point ranging from 79°-88°C. Similarly, the glycerol ester of tall oil rosin has a softening point of 80°-88°C ; the glycerol ester of wood rosin has a softening point of 88°C-96°C ; the deodorized glycerol ester of wood rosin has a softening point of 88°-96°C ; and the methyl ester of partially hydrogenated wood rosin is liquid at room temperature. Certain of the polyterpenes comprising the terpene hydrocarbon resins have softening points that vary with the type of resin and general, however, range from 100°-125°C. Similarly, the pentaerythritol ester of partially hydrogenated wood rosin has a softening point of from 102°-110°C ; the pentaerythritol ester of wood rosin has a softening point ranging from 109°-116° ; the glycerol ester of polymerized rosin has a softening point ranging from 80°-126°C ; and the glycerol ester of partially dimerized rosin has a comparable softening point.

Before the flavor and resin are combined, an anti-caking agent is added to the flavor and is mixed to form a slurry. Suitable anticaking agents include silica containing materials such as precipitated silica or silica gels such as the silica xerogels described in Pader et al., U.S. Patent No. 3,538,230 issued March 2, 1970 and incorporated herein by reference. Preferred are the silica xerogels marketed under the tradename "Syloid" by the W.R. Grace & Company, Davison Chemical Division. Other suitable materials include alumina, titanium dioxide, and the like. The anti-caking agent may be present in an amount of up to approximately 5% by weight of the final delivery system and preferably from 1% to 5%.

Other materials suitable for the preparation of the hydrophobic composition include the fats and/or waxes. Suitable fats include fatty acids such as hydrogenated or partially hydrogenated oils, with representative materials comprising palm oil, palm kernel oil, soybean oil, cottonseed oil, peanut oil, rapeseed oil, rice bran oil, sunflower oil, safflower oil, and mixtures thereof. Other materials also useful as fats herein may be selected from monoglycerides, diglycerides, triglycerides, polyglycerol esters, sorbitol esters, and mixtures thereof.

Suitable waxes include natural waxes, synthetic waxes, and mixtures thereof, and in particular, comprise materials selected from the group consisting of paraffin wax, beeswax, carnauba wax, candelilla wax, lanolin wax, bayberry wax, sugar cane wax, petrolatum, carbowax, spermaceti wax, rice bran wax, microcrystalline wax, and mixtures thereof. Naturally the foregoing is illustrative and not restrictive of suitable materials for inclusion in the delivery system of the invention, and the invention is considered to extend to unnamed equivalent materials within its scope.

The present invention includes both sugar-containing and sugarless confectionery compressed tablets.

In the instance where sweeteners are utilized in addition to those that may be included in the system, the present invention contemplates the inclusion of those sweeteners well known in the art, including both natural and artificial sweeteners. Thus, additional sweeteners may be chosen from the following non-limiting list : sugars such as sucrose, glucose (corn syrup), dextrose, invert sugar, fructose, polydextrose, and mixtures thereof, saccharine and its various salts such as the sodium or calcium salt ; cyclamic acid and its various salts such as the sodium salt ; the dipeptide sweeteners such as aspartame ; dihydrochalcone compounds, glycyrrhizin ; Stevia Rebaudiana (Stevioside) ; chloro derivatives of sucrose ; dihydroflavinol ; hydroxyguaiacol esters ; L-amino dicarboxylic acid gem-diamines ; L-aminodicarboxylic acid aminoalkenoic acid ester amides; and sugar alcohols such as sorbitol, sorbitol syrup, mannitol, xylitol, and the like. Also contemplated as an additional sweetener is the nonfermentable sugar substitute (hydrogenated starch hydrolysate) which is described in U.S. Reissue Patent No. 26,959. Also contemplated is the synthetic sweetener 3,6-dihydro-6-methyl-1-1,2,3-oxathiazin-4-one-2,2-dioxide, particularly the potassium (acesulfame-K), sodium and calcium salts

6

thereof as described in German Patent No. 2,001,017.7.

Suitable auxiliary flavorings including both natural and artificial flavors, and mints such as peppermint, menthol, artificial vanilla, cinnamon, various fruit flavors, both individual and mixed, and the like are contemplated. Such flavorings are generally utilized in amounts that will vary depending upon the amount of the flavor encapsulation delivery system employed and may, for example, range in amounts of up to approximately 1% by weight of the final compressed tablet composition weight. Thus the auxiliary flavorings may be present in the flavor encapsulation delivery system, in the compressed tablet composition itself, or both.

The color agents useful in the present invention are usually incorporated as color beads from 1% by weight to 6% by weight. The colorants can be dyes suitable for food, drug and cosmetic applications, and known as FD&C dyes and the like. The materials acceptable for the foregoing spectrum of use are preferably water-soluble. Illustrative examples include indigoid dye, known as FD&C Blue No. 2, which is the disodium salt of 5,5'-indigotindisulfonic acid. Similarly, the dye known as FD&C Green No. 1 comprises a triphenylmethane dye and is the monosodium salts of 4-[4-N-ethyl-p-sulfobenzylamino)-diphenylmethylene]-[1-(N-ethyl-N-p-sulfoniumbenzyl)-2-5-cyclohexadieneimine]. A full recitation of all FD&C and D&C dyes and their corresponding chemical structures may be found in the Kirk-Othmer Encyclopedia of Chemical Technology, in Volume 5, pages 857-884, which is incorporated herein by reference.

Flavor ingredients which are sensitive to moisture and subject to deterioration in the presence of moisture, will particularly benefit from the present protective encapsulation composition and process since they can be protected for extended periods of time. Furthermore, a sweetener, flavor, or other taste-affecting ingredient having a very bitter taste can also be presented to an individual by simply providing a controlled release which is at such a low level that it does not adversely affect the perception by the consumer. A further use is to provide sustained release of a high-intensity sweeteners at a very low concentration such that even without increasing the overall amount of the sweetener, the perception by the consumer of, for example, a confectionery compressed tablet composition can be sustained over a prolonged period of time.

A representative process for preparing a confectionery compressed tablet composition including the inventive system is as follows :

Sorbitol and a sweetener are mixed in a blender for about five minutes. Next, copper gluconate is added and mixed for about three minutes. The multiple encapsulation system is then added and mixing is continued for an additional three minutes. Thereafter, a coloring agent, if necessary, and a lubricant are added and mixed for two minutes. The resultant mixture (granulation) is then compressed in a tablet compression machine.

The present hydrophobic encapsulating composition may be prepared by first heating the fat and/or wax component to its melting point and maintaining it at a temperature of 85°C to 90°C under agitation. An emulsifier may be added to the melted fat and/or wax, after which the resulting melted material is agitated until mixing is complete, and is maintained at a temperature of 80° to 85°C.

Emulsified flavor oil is then added to the liquid hydrophobic coating component which has been maintained at a temperature of approximately 80°C, and the resulting material is agitated to form a homogenous mixture which is thereafter spray congealed to form solid particles containing a flavor composition which is intimately bound up in and throughout the hydrophobic component, alone or in admixture with a sweetener.

In the instance where the present delivery system is prepared with a sweetener, the procedure is essentially the same as previously described. Accordingly, the fat and/or wax component is first heated to its melting point and then is maintained at a temperature of 85°C to 90°C under agitation. At this point the sweetener component is added to the melted fat and/or wax, and in the instance where it is desired to include an emulsifier, the emulsifier is likewise added thereto. Thereafter, the melted hydrophobic encapsulation material is agitated until mixing is complete, and is maintained at a temperature of 80° to 85°C.

Emulsified flavor oil is then added to the liquid hydrophobic coating component which has been maintained at a temperature of approximately 80°C, and the resulting material is agitated to form a homogenous mixture which is thereafter spray congealed to form solid particles.

The process of spray congealing as used herein refers to feeding of the second homogeneous mixture through a heat controlled spray nozzle, and the formation of atomized liquid droplet within a closed, temperature regulated chamber, so that the droplets cool and solidify upon hitting the cooler temperature of the surrounding atmosphere, which may, for example, be approximately 25°C. The nozzle pressure is regulated to control particle droplet size, and droplets cool and congeal once they are emitted from the nozzle and contact the cooler environment. The result of this process is a dry particle or agglomerate which may have an approximate elliptical or spherical shape.

The hydrophilic composition may be prepared by dry spraying techniques which are well known in the art. In this procedure, a flavor oil is usually blended with a film forming agent dispersed in water and then emulsified to form a stable emulsion. Emulsification is necessary because flavor oils are insoluble under water needed to desolve the film forming agent. Obtaining an emulsion of low viscosity at high solids content is quite important to producing an acceptable product. Stability at higher temperatures is also critical to avoid a volatilization of the flavor oil. Maintaining low inlet temperatures (i.e., around 155°C) as well as minimizing the residence time in the drier are beneficial if the flavor is chemically unstable. Air drying conditions depend on the emulsion and product characteristics such as particle size of the product required. Modifications to the use of heat to remove the water from the emulsion have also been attempted. Some of these include the use of dehydrating solvent as the drying medium rather than hot air. Freeze drying has also been contemplated.

The foregoing description is offered by way of illustration and in fulfillment of applicants' duty to disclose the best mode for the practice of the invention. Accordingly, the above procedures may be modified within the skill of the art, and all such modifications are contemplated herein and made a part hereof.

EXAMPLES

The following examples provide further appreciation of the invention but are not meant in any way to restrict the effective scope of the invention.

EXAMPLE 1

Multiple encapsulation flavors were prepared in accordance with the present invention with peppermint flavor and incorporated into a confectionery compressed tablet for comparative testing and sensory evaluation. Each tablet product weighed 1.67 grams. Three types of compressed confectionery tablet samples were prepared in accordance with the present invention with peppermint flavor and the composition of these tablets are set forth below in Table I as Samples A, B, and C. Control confectionery compressed tablets were also prepared. Control I was prepared to include only a liquid peppermint flavor, Control II was prepared to include a hydrophilic-bound flavor alone, and Control III was prepared with a fat encapsulated flavor alone.

EP 0 433 004 A2

## TABLE I

### SUGARLESS CONFECTIONERY COMPRESSED TABLETS
### WITH MULTIPLE ENCAPSULATION SYSTEMS

| Ingredients (wt%) | Control I | Control II | Control III | A | B | C |
|---|---|---|---|---|---|---|
| Sugar Alcohol (Sorbitol) | 95.715 | 94.915 | 94.315 | 94.465 | 94.415 | 94.015 |
| Breath Deodorant (Copper Gluconate) | 0.75 | 0.75 | 0.75 | 0.75 | 0.75 | 0.75 |
| Color Mix | 3.00 | 3.00 | 3.00 | 3.00 | 3.00 | 3.00 |
| Lubricant (Mg. Stearate) | 0.30 | 0.30 | 0.30 | 0.30 | 0.30 | 0.30 |
| Liquid Flavor (liquid peppermint) | 0.20 | ----- | ----- | ----- | 0.05 | 0.05 |
| Spray Dried Flavor (20% Flavor) -Hydrophilic Composition- | ----- | 1.00 | ----- | 0.25 | 0.25 | 0.25 |
| Encapsulation (12.5% Flavor) -Hydrophobic Composition- | ----- | ----- | 1.60 | 1.20 | 1.20 | 1.60 |
| Sweetener (Aspartame) | 0.035 | 0.035 | 0.035 | 0.035 | 0.035 | 0.035 |

The above compositions were prepared in accordance with the method described hereinabove in the individual proportions as set forth in Table I above. Controls I and III and Sample C were then subjected to testing for sensory evaluation. The results of the sensory evaluation are set forth in Figure 1.

Referring to Figure 1, the results of the evaluation demonstrate a significantly improved compressed tablet product which demonstrated an initial flavor burst, and sustained flavor intensity. The high intensity of the initial burst was not achievable with encapsulated flavors. Moreover, the longevity of flavor delivery at a high intensity as a result of the present invention could not possibly be achieved by inclusion of the same amount of flavor or even by the addition of a greater amount of flavorant or by using fat encapsulated flavor alone.

A further desirable combination of initial flavor burst, greater overall intensity and extension can also be achieved by the combination of free liquid peppermint flavor, spray dried flavor and an encapsulated hydrophobic composition as illustrated by Samples B and C. Both inventive formulations delivered heightened levels of flavor for approximately six (6) minutes and continued to deliver flavor for the same period of time.

The exceptional results achieved by the present invention provide a means by which the artisan is able to engineer release or delivery of flavors to the oral cavity. The exquisite control provided by the present invention enables the practitioner to optimize active presence in the oral cavity with a minimum amount of active ingredient.

EXAMPLE 2

In this example, the flavor delivery system of the present invention was prepared with peppermint flavor and incorporated into confectionery compressed tablet samples to compare the attributes of the present invention to those compressed tablets made with sugar as a sweetener. Tablets containing the inventive delivery system were prepared in a manner similar to those in Example 1 and are set forth in Table IIa and labeled Samples E, F and G. Three control samples were also prepared and are set forth in Table IIb and labeled IV, V, VI, VII, and VIII. Samples E and F contained the combination of the present multiple encapsulation system spray dried flavor and a conventional liquid peppermint flavor. Sample G contained the combination of the present multiple encapsulation system and spray dried flavor. Control Samples VII and VIII contained the hydrophobic flavor release system alone, Control Samples V and VI contained the hydrophobic-bound flavor alone, and Control Sample IV contained liquid flavor alone.

## TABLE II a

### SUGARED CONFECTIONERY TABLETS WITH
### MULTIPLE ENCAPSULATIONS

| INGREDIENTS (WT%) | E | F | G |
|---|---|---|---|
| Sugar | 97.787 | 97.4582 | 97.8281 |
| Mouth Deodorant | 0.750 | 0.750 | 0.750 |
| Lubricant | 0.230 | 0.230 | 0.230 |
| Liquid Flavor (Peppermint) | 0.0411 | 0.0411 | ----- |
| Spray Dried Flavor (20% Flavor) | 0.2055 | 0.2055 | 0.2055 |
| Encapsulation (12.5% Flavor) | 0.9864 | 1.3152 | 0.9864 |

EP 0 433 004 A2

## TABLE II b

### CONTROL FORMULATIONS

| INGREDIENTS (WT%) | IV | V | VI | VII | VIII |
|---|---|---|---|---|---|
| Primary Sugar Mix | 98.8556 | 98.198 | 98.3624 | 97.7048 | 97.9925 |
| Mouth Deodorant | 0.750 | 0.750 | 0.750 | 0.750 | 0.750 |
| Lubricant | 0.230 | 0.230 | 0.230 | 0.230 | 0.230 |
| Liquid Flavor (Peppermint) | 0.1644 | ------ | 0.0411 | ------ | 0.0411 |
| Spray Dried Flavor (20% Flavor) | ------ | 0.822 | 0.6165 | ------ | ------ |
| Encapsulation (12.5% Flavor) | ------ | ------ | ------ | 1.3152 | 0.9864 |

EP 0 433 004 A2

The above inventive compositions as shown in Table IIa were prepared in accordance with the method described hereinabove in the proportions set forth in Table IIa. The Control confectionery compressed tablets were prepared in the conventional manner and contained the proportions set forth in Table IIb. Controls IV, VII and Samples E and F were then subjected to testing for sensory evaluation. The results of the sensory evaluation are set forth in Figure 2. Referring to Figure 2, the results of the evaluation demonstrate results similar to those obtained in Example 1. The sugared confectionery compressed tablets of the present invention demonstrated an unusual flavor effect in the mouth which included a dynamic initial flavor burst accompanied with a sustained high intensity and longevity of flavor otherwise unattainable with same amount of flavorant. These results are not achievable merely by using any of the known prior art tablet formulations. Further, the results also demonstrate the superiority of the confectionery compressed tablets made in accordance with the present invention over confectionery compressed tablets which are made with a combination of a liquid flavor and a spray dried flavor, Control VI.

The ineluctable conclusion is that the compressed tablets made in accordance with the present invention which exhibit accentuated initial flavor bursts, and heightened flavor intensity throughout the consumption period, can be refined and engineered to provide virtually any desired release pattern in the oral cavity. Such properties have been heretofore unattainable in prior art compressed tablets.

## EXAMPLE 3

Other experiments were carried out with sugarless compressed tablets and different flavors. Table III show the formulas used to prepare samples with a cinnamon flavor. The compressed tablets were prepared as set forth above, with Controls IX, X and XI and Inventive Sample H.

The Inventive Sample H demonstrated exceptional initial flavor intensity and excellent sustained flavor level.

## TABLE III

### SUGARLESS CONFECTIONERY TABLETS

### WITH MULTIPLE ENCAPSULATIONS – CINNAMON FLAVOR

| INGREDIENTS (WT%) | IX | X | XI | H |
|---|---|---|---|---|
| | % | % | % | % |
| Sugar Alcohol | 94.8 | 97.20 | 96.24 | 95.74 |
| Breath Deodorant | 0.75 | 0.75 | 0.75 | 0.75 |
| Lubricant | 0.30 | 0.30 | 0.30 | 0.30 |
| Sweetener (1500 PPM) | 0.150 | 0.150 | 0.150 | 0.15 |
| Flavor Beads | 4.00 | ——— | ——— | ——— |
| Spray Dried Flavor (Flavor Level) | ——— | 1.60 (0.32) | ——— | 0.50 (0.10) |
| Encapsulation Flavor (Flavor Level) | ——— | ——— | 2.56 (0.32) | 2.56 (0.32) |

EP 0 433 004 A2

EXAMPLE 4

Finally, compressed tablets were prepared with cherry flavors in accordance with the procedures previously set forth above. The formulations of Controls XII, XIII, and XIV and Inventive Sample I are set forth below in Table IV.

As previously experienced, the Inventive Sample I achieved for superior flavor impact and sustenance with a minimal amount of flavors.

## TABLE IV

### SUGARLESS CONFECTIONERY TABLETS

### WITH MULTIPLE ENCAPSULATIONS - CHERRY FLAVOR

| INGREDIENTS (WT%) | XII % | XIII % | XIV % | I % |
|---|---|---|---|---|
| Sugar Alcohol | 95.31 | 94.51 | 93.91 | 93.66 |
| Breath Deodorant | 0.75 | 0.75 | 0.75 | 0.75 |
| Lubricant | 0.30 | 0.30 | 0.30 | 0.30 |
| Sweetener (400 PPM) | 0.04 | 0.04 | 0.04 | 0.04 |
| Taste Crystals | 0.40 | 0.40 | 0.40 | 0.40 |
| Color Mix | 3.00 | 3.00 | 3.00 | 3.00 |
| Liquid Flavor | 0.20 | ____ | ____ | ____ |
| Spray Dried Flavor (Flavor Level) | ____ | 1.00 (0.20) | ____ | 0.25 (0.05) |
| Encapsulation Flavor (Flavor Level) | ____ | ____ | 1.60 (0.20) | 1.60 (0.20) |

This invention may be embodied in other forms or carried out in other ways without departing from the spirit or essential characteristics of the invention. The present disclosure is therefore to be considered as in all respects illustrative and not restrictive, and all changes which come within the meaning and range of the equivalency are intended to be embraced therein.

## Claims

1. A compressed tablet having flavour ingredients combined in the tablet to provide controlled release thereof in the oral cavity, comprising :
   (a) at least a first flavour ingredient intimately bound in a hydrophilic composition to provide rapid flavour release, and
   (b) a second flavour ingredient encapsulated in a hydrophobic composition to provide deferred delivery of the second ingredient over a period of time.

2. A compressed tablet according to claim 1, wherein the first and the second flavour ingredients are the same.

3. A compressed tablet according to claim 1, wherein the first and the second flavour ingredients are different.

4. A compressed tablet according to any preceding claim, wherein the first and second flavour ingredients are uniformly dispersed within the tablet.

5. A compressed tablet according to any preceding claim, wherein the first and the second flavour ingredients are selected from flavours, sweeteners, and mixtures thereof.

6. A compressed tablet according to claim 5, wherein the flavours are selected from spearmint oil, cinnamon oil, oil of wintergreen (methylsalicylate), peppermint oil, clove oil, bay oil, anise oil, eucalyptus oil, thyme oil, cedar leaf oil, oil of nutmeg, allspice, oil of sage, mace, oil of bitter almonds, cassia oil, vanilla, lemon oil, orange oil, grape oil, lime oil, grapefruit oil, apple essence, pear essence, peach essence, grape essence, strawberry essence, cherry essence, raspberry essence, plum essence, pineapple essence, apricot essence, banana oil and mixtures thereof.

7. A compressed tablet according to claim 5 or 6, wherein the flavour is present in an amount of from 0.05% to 1.0% by weight of the total weight of the tablet.

8. A compressed tablet according to claim 5 or 6, wherein the flavour is present in an amount of from 0.15% to 0.35% by weight of the tablet.

9. A compressed tablet according to any one of claims 5 to 8, wherein the sweetener is selected from amino acid-based sweeteners, dipeptide sweeteners, glycyrrhizin, dipotassium glycyrrhizin, glycyrrhizic acid, saccharin and its salts, acesulphame salts, cyclamates, steviosides, talin, chloro derivatives of sucrose, aspartmae, sucralose, alitame, dihydrochalcone compounds and mixtures thereof.

10. A compressed tablet according to any one of claims 5 to 9, wherein the sweetener is present in an amount up to 3000 parts per million.

11. A compressed tablet according to any preceding claim, wherein the hydrophilic composition includes a hydrophilic component selected from polymers, gelatin, gum arabic, starches, modified starches, maltodextrin, corn syrup solids, hydrocolloids and carrageen.

12. A compressed tablet according to claim 11, wherein the hydrophilic component is combined with a bulking agent.

13. A compressed tablet according to any preceding claim, wherein the hydrophobic composition includes a hydrophobic component selected from fats, waxes, resins and mixtures thereof.

14. A compressed tablet according to claim 13 wherein the hydrophobic component is a fat present in the hydrophobic composition in an amount of from 50% to 85% by weight of the hydrophobic composition and the flavour ingredient is present in an amount of from 5% to 20% by weight of the hydrophobic composition.

15. A compressed tablet according to claim 13, wherein the hydrophobic component is a wax present in the hydrophobic composition in an amount of from 45% to 85% by weight and the flavour ingredient is present in an amount of from 3% to 30% by weight.

16. A compressed tablet according to claim 13, wherein the hydrophobic composition is a resin present in the hydrophobic composition in an amount of from 20% to 80% by weight and the flavour ingredient is present in an amount of from 80% to 20% by weight.

17. A compressed tablet according to claim 13, wherein the hydrophobic component is a fat/wax combination, wherein the fat is present in an amount of from 5% to 85% and the wax is present in an amount of from 5% to 70% and the flavour ingredient is present in an amount of from 5% to 30%.

18. A compressed tablet according to claim 13, wherein the hydrophobic component is a fat and resin combination, wherein the fat is present in an amount of from 50% to 84% by weight, the resin is present in an amount of from 10% to 20% by weight, and the flavour ingredient is present in an amount of from 5% to 25% by weight.

19. A compressed tablet according to claim 13, wherein the hydrophobic component is a wax/resin combination, wherein the wax is present in an amount of from 45% to 85% by weight, the resin is present in an amount from 10% to 20% by weight, and the flavour ingredient is present in an amount of from 5% to 30% by weight.

20. A compressed tablet according to claim 13, wherein the hydrophobic component is present in a fat/wax-/resin combination, wherein the fat is present in an amount of from 30% to 75% by weight, the wax is present in an amount of from 5% to 25% by weight and the resin is present in an amount of from 10% to 25% by weight and the flavour ingredient is present in an amount of from 5% to 30% by weight.

21. A compressed tablet according to any one of claims 13, 14, 17, 18 and 20, wherein the fat is selected from hydrogenated and partially hydrogenated oils.

22. A compressed tablet according to claim 21, wherein the hydrogenated and the partially hydrogenated oils are selected from palm oil, palm kernel oil, soyabean oil, cottonseed soil, peanut oil, rapeseed oil, rice bran oil, sunflower oil, safflower oil, and mixtures thereof.

23. A compressed tablet according to any one of claims 13, 14, 17, 18, 20, 21 and 22, wherein the fat is selected from monoglycerides, diglycerides, triglycerides, polyglycerol esters, sorbitol esters, and mixtures thereof.

24. . A compressed tablet according to any one of claims 13, 15, 17, 19 and 20, wherein the wax is selected from natural waxes, synthetic waxes and mixtures thereof.

25. A compressed tablet according to any one of claims 13, 15, 17, 19, 20 and 24, wherein the wax is selected from paraffin wax, beeswax, carnauba wax, candelilla wax, lanolin wax, bayberry wax, sugar cane wax, petrolatum, carbowax, spermaceti wax, rice bran wax, microcrystalline wax, and mixtures thereof.

26. A compressed tablet according to any one of claims 13, 16, 18, 19 and 20, wherein the resin component is selected from rosins, rosin esters and mixtures thereof.

27. A compressed tablet according to any one of claims 13, 16, 18, 19, 20 and 26, wherein the resin component is selected from pentaerythritol ester of partially hydrogenated wood rosin ; pentaerythritol ester of wood rosin ; glycerol ester of wood rosin ; glycerol ester of partially dimerized rosin ; glycerol ester of polymerized rosin ; glycerol ester of tall oil rosin ; glycerol ester of wood rosin and partially hydrogenated wood/gum rosin and partially hydrogenated methyl ester of rosin, such as polymers of alpha-pinene or beta-pinene ; terpene resins including polyterpene ; and mixtures thereof.

28. A compressed tablet according to any preceding claim, wherein the hydrophobic composition further includes an emulsifier selected from monoglycerides, diglycerides and triglycerides of fatty acids, polyg-

18

is present in an amount up to 3000 parts per million.

11. A process for producing a compressed tablet according to any preceding claim, wherein the hydrophilic composition includes a hydrophilic component selected from polymers, gelatin, gum arabic, starches, modified starches, maltodextrin, corn syrup solids, hydrocolloids and carrageen.

12. A process for producing a compressed tablet according to claim 11, wherein the hydrophilic component is combined with a bulking agent.

13. A process for producing a compressed tablet according to any preceding claim, wherein the hydrophobic composition includes a hydrophobic component selected from fats, waxes, resins and mixtures thereof.

14. A process for producing a compressed tablet according to claim 13 wherein the hydrophobic component is a fat present in the hydrophobic composition in an amount of from 50% to 85% by weight of the hydrophobic composition and the flavour ingredient is present in an amount of from 5% to 20% by weight of the hydrophobic composition.

15. A process for producing a compressed tablet according to claim 13, wherein the hydrophobic component is a wax present in the hydrophobic composition in an amount of from 45% to 85% by weight and the flavour ingredient is present in an amount of from 3% to 30% by weight.

16. A process for producing a compressed tablet according to claim 13, wherein the hydrophobic component is a resin present in the hydrophobic composition in an amount of from 20% to 80% by weight and the flavour ingredient is present in an amount of from 80% to 20% by weight.

17. A process for producing a compressed tablet according to claim 13, wherein the hydrophobic component is a fat/wax combination, wherein the fat is present in an amount of from 5% to 85% and the wax is present in an amount of from 5% to 70% and the flavour ingredient is present in an amount of from 5% to 30%.

18. A process for producing a compressed tablet according to claim 13, wherein the hydrophobic component is a fat and resin combination, wherein the fat is present in an amount of from 50% to 84% by weight, the resin is present in an amount of from 10% to 20% by weight, and the flavour ingredient is present in an amount of from 5% to 25% by weight.

19. A process for producing a compressed tablet according to claim 13, wherein the hydrophobic component is a wax/resin combination, wherein the wax is present in an amount of from 45% to 85% by weight, the resin is present in an amount from 10% to 20% by weight, and the flavour ingredient is present in an amount of from 5% to 30% by weight.

20. A process for producing a compressed tablet according to claim 13, wherein the hydrophobic component is present in a fat/wax/resin combination, wherein the fat is present in an amount of from 30% to 75% by weight, the wax is present in an amount of from 5% to 25% by weight and the resin is present in an amount of from 10% to 25% by weight and the flavour ingredient is present in an amount of from 5% to 30% by weight.

21. A process for producing a compressed tablet according to any one of claims 13, 14, 17, 18 and 20, wherein the fat is selected from hydrogenated and partially hydrogenated oils.

22. A process for producing a compressed tablet according to claim 21, wherein the hydrogenated and the partially hydrogenated oils are selected from palm oil, palm kernel oil, soyabean oil, cottonseed soil, peanut oil, rapeseed oil, rice bran oil, sunflower oil, safflower oil, and mixtures thereof.

23. A process for producing a compressed tablet according to any one of claims 13, 14, 17, 18, 20, 21 and 22, wherein the fat is selected from monoglycerides, diglycerides, triglycerides, polyglycerol esters, sorbitol esters, and mixtures thereof.

24. A process for producing a compressed tablet according to any one of claims 13, 15, 17, 19 and 20, wherein the wax is selected from natural waxes, synthetic waxes and mixtures thereof.

lycerol esters, lecithin, stearates, ester derivatives of stearates, palmitates, ester derivatives of palmitates, oleates, ester derivatives of oleates, glycerides, sucrose polyesters, polyglycerol esters and mixtures thereof, the emulsifier present in an amount of up to 10% by weight of the hydrophobic composition.

29. A compressed tablet according to claim 28, wherein the emulsifier is present in an amount of from 2% to 7% by weight of the hydrophobic composition.

30. A compressed tablet according to claim 28, wherein the emulsifier is present in an amount of from 4% to 6% by weight of the hydrophobic composition.

31. A method of preparing a confectionery compressed tablet having flavour ingredients with controlled release including the steps of :
(a) blending a first flavour ingredient intimately bound in a hydrophilic composition and a second flavour ingredient encapsulated in a hydrophobic composition with a confectionery tablet base ; and
(b) forming compressed tablets from the mixture which results from step (a) hereinabove.

32. The method of claim 31, wherein the compressed tablet is formed in a tablet compression machine.

**Claims for the following Contracting States : ES**

1. A process for producing a compressed tablet having flavour ingredients combined in the tablet to provide controlled release thereof in the oral cavity, the process combining :
(a) at least a first flavour ingredient intimately bound in a hydrophilic composition to provide rapid flavour release, and
(b) a second flavour ingredient encapsulated in a hydrophobic composition to provide deferred delivery of the second ingredient over a period of time.

2. A process for producing a compressed tablet according to claim 1, wherein the first and the second flavour ingredients are the same.

3. A process for producing a compressed tablet according to claim 1, wherein the first and the second flavour ingredients are different.

4. A process for producing a compressed tablet according to any preceding claim, wherein the first and second flavour ingredients are uniformly dispersed within the tablet.

5. A process for producing a compressed tablet according to any preceding claim, wherein the first and the second flavour ingredients are selected from flavours, sweeteners, and mixtures thereof.

6. A process for producing a compressed tablet according to claim 5, wherein the flavours are selected from spearmint oil, cinnamon oil, oil of wintergreen (methylsalicylate), peppermint oil, clove oil, bay oil, anise oil, eucalyptus oil, thyme oil, cedar leaf oil, oil of nutmeg, allspice, oil of sage, mace, oil of bitter almonds, cassia oil, vanilla, lemon oil, orange oil, grape oil, lime oil, grapefruit oil, apple essence, pear essence, peach essence, grape essence, strawberry essence, cherry essence, raspberry essence, plum essence, pineapple essence, apricot essence, banana oil and mixtures thereof.

7. A process for producing a compressed tablet according to claim 5 or 6, wherein the flavour is present in an amount of from 0.05% to 1.0% by weight of the total weight of the tablet.

8. A process for producing a compressed tablet according to claim 5 or 6, wherein the flavour is present in an amount of from 0.15% to 0.35% by weight of the tablet.

9. A process for producing a compressed tablet according to any one of claims 5 to 8, wherein the sweetener is selected from amino acid-based sweeteners, dipeptide sweeteners, glycyrrhizin, dipotassium glycyrrhizin, glycyrrhizic acid, saccharin and its salts, acesulphame salts, cyclamates, steviosides, talin, chloro derivatives of sucrose, aspartmae, sucralose, alitame, dihydrochalcone compounds and mixtures thereof.

10. A process for producing a compressed tablet according to any one of claims 5 to 9, wherein the sweetener

25. A process for producing a compressed tablet according to any one of claims 13, 15, 17, 19, 20 and 24, wherein the wax is selected from paraffin wax, beeswax, carnauba wax, candelilla wax, lanolin wax, bayberry wax, sugar cane wax, petrolatum, carbowax, spermaceti wax, rice bran wax, microcrystalline wax, and mixtures thereof.

26. A process for producing a compressed tablet according to any one of claims 13, 16, 18, 19 and 20, wherein the resin component is selected from rosins, rosin esters and mixtures thereof.

27. A process for producing a compressed tablet according to any one of claims 13, 16, 18, 19, 20 and 26, wherein the resin component is selected from pentaerythritol ester of partially hydrogenated wood rosin ; pentaerythritol ester of wood rosin ; glycerol ester of wood rosin ; glycerol ester of partially dimerized rosin; glycerol ester of polymerized rosin ; glycerol ester of tall oil rosin ; glycerol ester of wood rosin and partially hydrogenated wood/gum rosin and partially hydrogenated methyl ester of rosin, such as polymers of alpha-pinene or beta-pinene ; terpene resins including polyterpene ; and mixtures thereof.

28. A process for producing a compressed tablet according to any preceding claim, wherein the hydrophobic composition further includes an emulsifier selected from monoglycerides, diglycerides and triglycerides of fatty acids, polyglycerol esters, lecithin, stearates, ester derivatives of stearates, palmitates, ester derivatives of palmitates, oleates, ester derivatives of oleates, glycerides, sucrose polyesters, polyglycerol esters and mixtures thereof, the emulsifier present in an amount of up to 10% by weight of the hydrophobic composition.

29. A process for producing a compressed tablet according to claim 28, wherein the emulsifier is present in an amount of from 2% to 7% by weight of the hydrophobic composition.

30. A process for producing a compressed tablet according to claim 28, wherein the emulsifier is present in an amount of from 4% to 6% by weight of the hydrophobic composition.

31. A method of preparing a confectionery compressed tablet having flavour ingredients with controlled release including the steps of :
    (a) blending a first flavour ingredient intimately bound in a hydrophilic composition and a second flavour ingredient encapsulated in a hydrophobic composition with a confectionery tablet base ; and
    (b) forming compressed tablets from the mixture which results from step (a) hereinabove.

32. A method according to claim 31, wherein the compressed tablet is formed in a tablet compression machine.

FIG-1 SUGARLESS PRESSED MINTS FLAVOR INTENSITY

PEPPERMINT FLAVOR

FIG-2 SUGAR PRESSED MINTS FLAVOR INTENSITY

CONTROL IV — +— CONTROL VII —*— SAMPLES E & F

PEPPERMINT FLAVOR